# EUROPEAN PATENT APPLICATION

(11) **EP 4 250 793 A1**
(43) Date of publication of application: **27.09.2023**
(21) Application number: 23163501.2
(22) Date of filing: 22.03.2023
(51) Int. Cl.: H04W 12/121, H04L 9/40

(54) **AN ANTI-SNOOPING APPARATUS**

(30) Priority: 22.03.2022 IN 202211016013
(71) Applicant: VUI Consultancy Pvt. Ltd, 110063 New Delhi (IN)
(72) Inventor: Jakher, Achen, 122002 Gurgaon, Haryana (IN); Goel, Aman, 122002 Gurgaon, Haryana (IN)
(74) Representative: Sach, Greg Robert

(57) **Abstract**

Disclosed is an anti-snooping apparatus to identify security status of a smart device. The anti-snooping apparatus includes a memory unit to store instructions, a processing unit coupled to the memory unit to process the stored instructions, an antenna coupled to the processing unit for creating a Wi-Fi network to connect with the smart device, a graphical user interface to display the processed instructions. The instructions initiates from a step of connecting the antenna wirelessly to the smart device, followed by a step of analyzing data packets to identify information going in and out of the smart device; followed by a step of scanning the smart device to detect IP's having suspicious connections to malicious servers and suspicious outflow of data; and finally followed by a step of displaying the security status and result of the scan of the smart device.

## Description

### CROSS-REFERENCE TO RELATED APPLICATION

The present application claims priority of a granted India Application No. 202211016013 (Indian Granted Patent Number- IN 418880)filed on March 22, 2022, which is incorporated herein in its entirety by reference.

### BACKGROUND OF THE INVENTION

### 1. FIELD OF THE INVENTION

The present invention generally relates to an apparatus for identifying security status of a smart device, and more particularly relates to an anti-snooping apparatus to identify secure status of the smart device.

### 2. DESCRIPTION OF RELATED ART

Personally identifiable information (PII) may be collected by a variety of organizations, including healthcare organizations, governmental organizations, financial entities (e.g., credit card companies, banks, etc.), credit bureaus, educational institutions, and other organizations. PII includes information that can be used to uniquely identify an individual and may include, the individual's full name, date of birth, social security number/adhaar number/pan number, bank or credit card numbers, passwords, addresses, phone numbers, and the like.

PII data is increasingly maintained in electronic form, making it easier for such data to become compromised, such as through a hacking event, inadvertent disclosure, or other data breach incidents. Compromised PII data may be used for identify theft and for other nefarious purposes. In addition to data breach events, PII can be compromised through "phishing," which refers to a process of masquerading as a trustworthy entity in an electronic communication.

As a result, except for law enforcement access to phone records, user privacy was generally preserved. Protocols that underpin cellular communication embed an assumption of trusted hardware and infrastructure, and specifications for cellular backend infrastructure contain few formal prescriptions for preserving user data privacy. The result is that the locations of all users are constantly tracked as they simply carry a phone in their pocket, without even using it.

In many countries, every mobile user can be physically located by anyone with a few dollars to spend. This privacy loss is ongoing and is independent of leakage by apps that users choose to install on their phones (which is a related but orthogonal issue). While this major privacy issue has long been present in the architecture, the practical reality of the problem and lack of technical countermeasures against bulk surveillance is beyond what was known before.

Various software has been created as antivirus to detect a very wide range of existing malicious programs, detecting new modifications of known computer viruses, worms and Trojan viruses and detecting malicious software that's located in packaged files. However, the softwares are required to be install on the smart device to detect any viral attack, phishing, and unethical tracking of the smart device, which leads to access of personal identical information (PII) from the smart device.

Therefore, there is a need of an anti-snooping apparatus for detecting the secure status of the smart device. The anti-snooping apparatus should be able to detect any suspicious or malicious IP's. Further, the anti-snooping apparatus should be able to detect suspicious or malicious IP's without the need of installing any software on the smart device.

### SUMMARY OF THE INVENTION

In accordance with teachings of the present invention, an anti-snooping apparatus to identify security status of a smart device is provided.

An objective of the present invention is to provide an anti-snooping apparatus with a memory unit to store instructions, a processing unit coupled to the memory unit to process the stored instructions, an antenna coupled to the processing unit for creating a Wi-Fi network to connect with the smart device, a graphical user interface to display the processed instructions.

The instructions initiates from a step of connecting the antenna wirelessly to the smart device, followed by a step of analyzing data packets to identify information going in and out of the smart device; followed by a step of scanning the smart device to detect IP's having suspicious connections to malicious servers and suspicious outflow of data; and finally followed by a step of displaying the security status and result of the scan of the smart device.

Another objective of the present invention is to provide the instructions with a step of providing a downloadable report containing a list of suspicious IP's, and behavior of the connections made to the IP's and malicious server from the smart device. Further, the downloadable report contains behavior of the connections made to the IP's and malicious servers from the smart device.

Another objective of the present invention is to provide the instructions with a step of monitoring of traffic from the IP's. Further, the instructions include a step of storing malicious IP's and suspicious servers data in the memory unit.

Another objective of the present invention is to provide the instructions with a step of crawling malicious IP's and suspicious servers data from the smart device, followed by a step of comparing the crawled malicious IP's and servers with the stored malicious IPs and suspicious servers; and further followed by a step of assimilating the malicious IP's and suspicious servers to store in the memory unit.

While a number of features are described herein with respect to embodiments of the inventions; features described with respect to a given embodiment also may be employed in connection with other embodiments. The following description and the annexed drawings set forth certain illustrative embodiments of the inventions. These embodiments are indicative, however, of but a few of the various ways in which the principles of the inventions may be employed. Other objects, advantages, and novel features according to aspects of the inventions will become apparent from the following detailed description when considered in conjunction with the drawings.

### BRIEF DESCRIPTION OF THE DRAWINGS

The annexed drawings, which are not necessarily to scale, show various aspects of the inventions in which similar reference numerals are used to indicate the same or similar parts in the various views.
FIG. 1 illustrates a block diagram representing an anti-snooping apparatus to identify security status of a smart device;
FIG. 2 illustrates a screenshot of a graphical user interface showing a tab to connect antenna wirelessly to the smart device;
FIG. 3 illustrates a screenshot of a graphical user interface showing a tab for initiating analysis of data packets in the smart device;
FIG. 4 illustrates a screenshot of a graphical user interface showing scanned results and secure status of the smart device; and
FIG. 5 illustrates a screenshot of a graphical user interface showing scanned results and secure status of the smart device in another exemplary embodiment of the present invention.

### DETAILED DESCRIPTION OF DRAWINGS

The present disclosure is now described in detail with reference to the drawings. In the drawings, each element with a reference number is similar to other elements with the same reference number independent of any letter designation following the reference number. In the text, a reference number with a specific letter designation following the reference number refers to the specific element with the number and letter designation and a reference number without a specific letter designation refers to all elements with the same reference number independent of any letter designation following the reference number in the drawings.

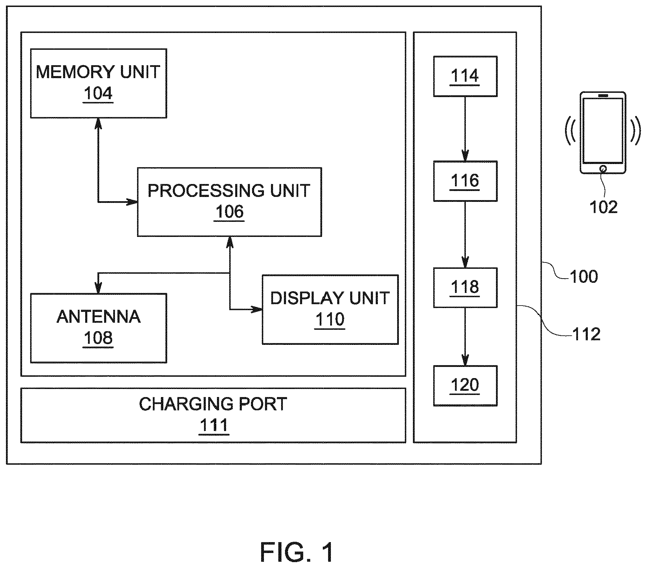

FIG. 1 illustrates a block diagram representing an anti-snooping apparatus 100 to identify security status of a smart device 102. The anti-snooping apparatus 100 includes a memory unit 104, a processing unit 106, an antenna 108, and a display unit. The memory unit 104 stores instructions 112.

Examples of the memory unit 104 include but not limited to a RAM, ROM, Flash memory, server etc. The processing unit 106 is coupled to the memory unit 104 to process the stored instructions 112. Examples of the processing unit 106 include but not limited to a microprocessor, microcontroller, controllers etc.

The antenna 108 is coupled to the processing unit 106 for creating a Wi-Fi network to connect with the smart device 102. Examples of the antenna 108 include but not limited to a Horn Antenna, Parabolic Reflector Antenna, Helical Antenna, Microstrip Antenna, Dipole Antenna etc.

The display unit 110 displays a graphical user interface displays the processed instructions. Examples of the graphical user interface include but not limited to of a Microsoft windows, macOS, chrome OS, Linux etc. Examples of the display unit 110 LED, LCD, OLED etc. In an embodiment, the apparatus 100 further includes a charging port 111 to receive power to charge the memory unit 104, the processing unit 106, the antenna 108 and the display unit 110.

Examples of the charging port 111 include but not limited to a USB port, C-port, Wireless charging, and any other similar type of port. The instructions 112 initiates from a step 114 of connecting the antenna 108 wirelessly to the smart device 102. The step 114 is followed by a step 116 of analyzing data packets to identify information going in and out of the smart device 102.

The step 116 is further followed by a step 118 of scanning the smart device to detect IP's having suspicious connections to malicious servers and suspicious outflow of data. The step 118 is then followed by a step 120 of displaying the security status and result of the scan of the smart device. The processing unit 106 analyzes the data packets to identify information related to the data moving in and out of the smart device.

The processing unit 106 tracks the movement of the data on analyzing the header of the data packets. The header includes the IP addresses of the source and destination of the communication made through the smart device 102. Further, the processing unit 106 captures signatures that are embedded in the data packet's layers using tethering and analyses these signatures against malicious hosts.

Further, the processing unit 106 captures mutation in the communication to identify any unnatural path taken by the data packets. Furthermore, the processing unit 106 traces hop packets for any unnatural path. The processing unit 106 verifies signature on bit level.

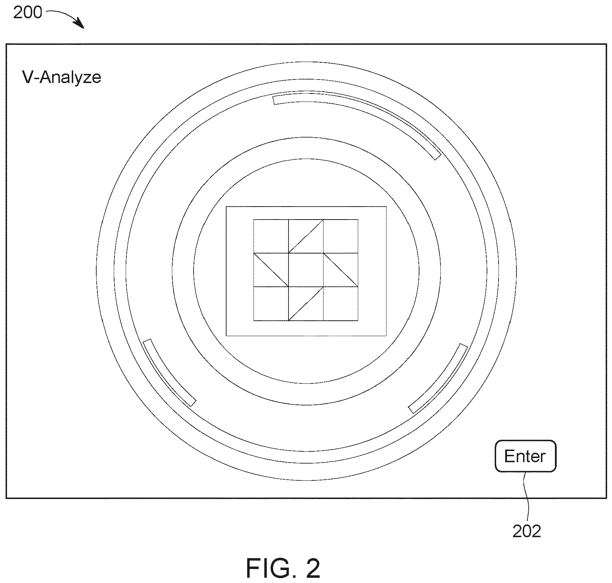

FIG. 2 illustrates a screenshot of a graphical user interface 200 showing a tab 202 to connect antenna wirelessly to the smart device. The tab 202 indicates 'enter', representing initiating of the Wi-Fi connection from the antenna to join with the network of the smart device. It would be readily apparent to those skilled in the art that various types of wireless communication may be established without deviating from the scope of the present invention.

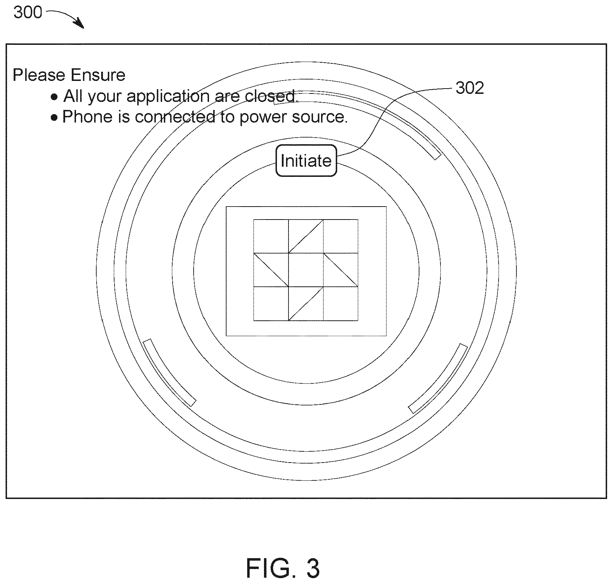

FIG. 3 illustrates a screenshot of a graphical user interface 300 showing a tab 302 for initiating analysis of data packets in the smart device. The tab 302 indicates 'initialize' representing to initiate analyzing and scanning of the smart device to identify malicious servers and suspicious outflow of data. It would be readily apparent to those skilled in the art that various forms & methods for analyzing the data packets may be envisioned without deviating from the scope of the present invention.

In another preferred embodiment of the present invention, the tab '302' operates only when all of software applications running on the smart device are closed, and the smart device is connected to power source. It would be readily apparent to those skilled in the art that various conditions may be envisioned to operate the tab 302 without deviating from the scope of the present invention.

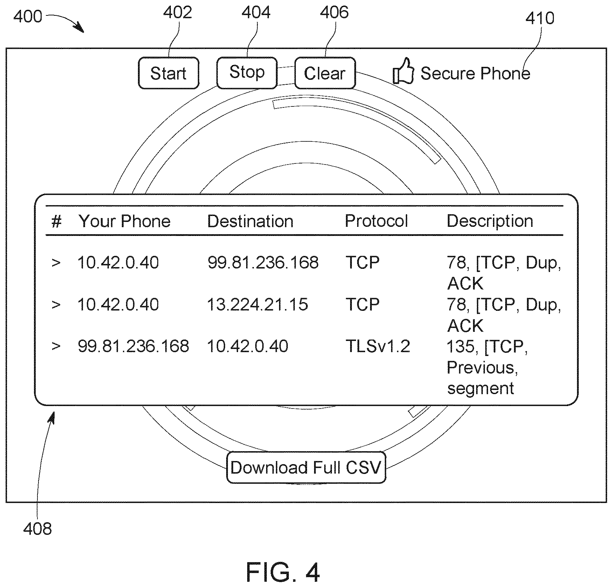

FIG. 4 illustrates a screenshot of a graphical user interface 400 showing scanned results and secure status of the smart device. The interface 400 shows a tab 402, a tab 404, and tab 406. The tab 402 represents a 'start button' to start the analyses of the smart device, the tab 404 represents a 'stop button' to stop the analyses of the smart device, and the tab 406 represents a `clear button' to clear results 408 of the scan of the smart device.

In an exemplary embodiment, the results 408 of the scan of the smart device indicates the source IP address, destination IP address, protocol, and description of the analyses. Further, the analyses display the security status of the smart device i.e. `Secure Phone' 410.

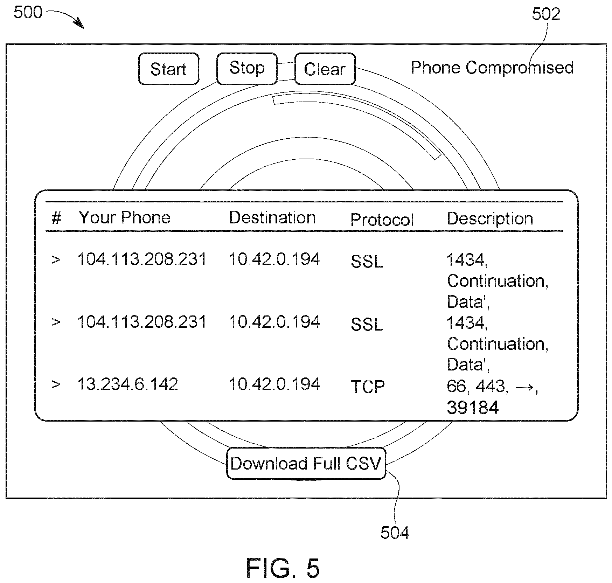

FIG. 5 illustrates a screenshot of a graphical user interface 500 showing scanned results and secure status of the smart device in another exemplary embodiment of the present invention. The analyses display the security status of the smart device i.e. 'Phone Compromised' 502.

Further, the system provides a tab 504 for 'Download Full CSV'. The CSV contains a list of suspicious IP's and behavior of the connections made to the IP's and malicious servers from the smart device. It would be readily apparent to those skilled in the art that various types of format of the report may be envisioned without deviating from the scope of the present invention.

In another preferred embodiment of the present invention though not shown in FIGURES, the instructions further include a step of monitoring of traffic from the IP's. Further, the instructions include a step of storing malicious IP's and suspicious servers data in the memory unit.

Further, the instructions include a step of crawling malicious IP's and suspicious servers data from the smart device, further followed by a step of comparing the crawled malicious IP's and servers with the stored malicious IPs and suspicious servers; and followed by a step of assimilating the malicious IP's and suspicious servers to store in the memory unit.

The present invention offers various advantages such as providing a security status of the smart device without downloading any software application on the smart device. Further, the present invention is a hardware product which attaches to the smart device using a Wi-Fi network ensuring complete security of the smart device from getting compromised. Further, the present invention is non-intrusive and give better results than a software (intrusive) installed on the smart device.

It should be appreciated that many of the elements discussed in this specification may be implemented in a hardware circuit(s), a circuitry executing software code or instructions which are encoded within computer readable media accessible to the circuitry, or a combination of a hardware circuit(s) and a circuitry or control block of an integrated circuit executing machine readable code encoded within a computer readable media. As such, the term circuit, module, server, application, or other equivalent description of an element as used throughout this specification is, unless otherwise indicated, intended to encompass a hardware circuit (whether discrete elements or an integrated circuit block), a circuitry or control block executing code encoded in a computer readable media, or a combination of a hardware circuit(s) and a circuitry and/or control block executing such code.

All ranges and ratio limits disclosed in the specification and claims may be combined in any manner. Unless specifically stated otherwise, references to "a," "an," and/or "the" may include one or more than one, and that reference to an item in the singular may also include the item in the plural.

Although the inventions have been shown and described with respect to a certain embodiment or embodiments, equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the inventions. In addition, while a particular feature of the inventions may have been described above with respect to only one or more of several illustrated embodiments, such feature may be combined with one or more other features of the other embodiments, as may be desired and advantageous for any given or particular application.

## Claims

1. An anti-snooping apparatus to identify security status of a smart device, wherein the anti-snooping apparatus comprising:
a memory unit to store instructions;
a processing unit coupled to the memory unit to process the stored instructions;
an antenna coupled to the processing unit for creating a Wi-Fi network to connect with the smart device; and
a display unit to display a graphical user interface to display the processed instructions, wherein the instructions comprising:
connecting the antenna wirelessly to the smart device;
analyzing data packets to identify information going in and out of the smart device;
scanning the smart device to detect internet protocol (IP's) having suspicious connections to malicious servers and suspicious outflow of data; and
displaying the security status and result of the scan of the smart device.

2. The apparatus according to claim 1, wherein the instructions further comprising a step of providing a downloadable report containing a list of suspicious IP's retrieved from the analyses of the smart device.

3. The apparatus according to claim 2, wherein the downloadable report further contains behavior of the connections made to the IP's and malicious servers from the smart device.

4. The apparatus according to claim 1, wherein the instructions further comprising a step of monitoring of traffic from the IP's.

5. The apparatus according to claim 4, wherein the instructions further comprising a step of storing malicious IP's and suspicious servers data in the memory unit.

6. The apparatus according to claim 5, wherein the instructions further comprising:
crawling malicious IP's and suspicious servers data from the smart device;
comparing the crawled malicious IP's and servers with the stored malicious IPs and suspicious servers; and
assimilating the malicious IP's and suspicious servers to store in the memory unit.

7. The apparatus according to claim 1, wherein the instructions further comprising a step of initiating analysis of data packets on ensuring closing of all software applications running on the smart device.

8. The apparatus according to claim 1, wherein the instructions further comprising a step of ensuring the smart device is plugged into a power source.

9. The apparatus according to claim 1 further comprising a charging port to receive power to charge the memory unit, the processing unit, the antenna and the display unit.
